# EUROPEAN PATENT APPLICATION

(11) **EP 4 270 589 A1**
(43) Date of publication of application: **01.11.2023**
(21) Application number: 21910126.8
(22) Date of filing: 25.11.2021
(51) Int. Cl.: H01M 10/18, H01M 50/102, H01M 50/184, H01M 50/186, H01M 50/193

(54) **BIPOLAR STORAGE BATTERY AND PRODUCTION METHOD THEREFOR**

(30) Priority: 22.12.2020 JP 2020212892
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA, Akira, Tokyo 100-8322 (JP); NAKAJIMA, Yasuo, Tokyo 100-8322 (JP); SUYAMA, Kenichi, Tokyo 100-8322 (JP); TANAKA, Hiroki, Tokyo 100-8322 (JP); FURUKAWA, Jun, Jyoban-shimofunao-machi, Iwaki-shi, Fukushima 972- 8501 (JP); NISHIKUBO, Hideo, Jyoban-shimofunao-machi, Iwaki-shi, Fukushima 972- 8501 (JP); YAMADA, Keizo, Jyoban-shimofunao-machi, Iwaki-shi, Fukushima 972- 8501 (JP); HALAPI, Miklos, 1158 Budapest (HU); MAROSFOI, Botond, 1158 Budapest (HU); GOMBOS, Akos, 1158 Budapest (HU); TATRAI, David, 1158 Budapest (HU); GIDOFALVI-KOVACS, Tenia, 1158 Budapest (HU); VARGA, Zoltan, 1158 Budapest (HU)
(74) Representative: Grünecker Patent- und Rechtsanwälte PartG mbB
(86) International application number: PCT/JP2021/043237
(87) International publication number: WO 2022/137973

(57) **Abstract**

To provide a bipolar battery and a method of manufacturing the same capable of reliably preventing electrolytic solution leakage out of a cell by means of a simple seal structure. A bipolar battery (100) includes a plurality of cell members (150), each including a positive electrode (151) having a positive active material layer (103), a negative electrode (152) having a negative active material layer (104), and an electrolyte layer (105) interposed between the positive electrode (151) and the negative electrode (152), and a plurality of frame units (110), (120), (130) respectively forming a plurality of cells (160) respectively incorporating the plurality of cell members (150). Each of the plurality of frame units (110), (120), (130) is configured by a frame unit made of a light transmissive resin material. Two of the frame units made of a light transmissive resin material adjacent in a stacking direction of the cell members (150) are welded and joined via a joining member (141) made of a light absorbing resin material at a welded portion (140).

## Description

### Technical Field

The present invention relates to a bipolar battery and a method of manufacturing the same.

### Background Art

In recent years, power generation facilities using natural energy such as sunlight and wind power have been increasing. In such a power generation facility, an amount of power generation cannot be controlled, and thus a power load is leveled using a storage battery. That is, when the amount of power generation is larger than a consumption, a difference is charged into the storage battery, and when the amount of power generation is smaller than a consumption, a difference is discharged from the storage battery. As the above-described storage battery, lead-acid batteries are frequently used from the viewpoint of economic efficiency, safety, and the like, and among them, bipolar (bipolar) lead-acid batteries have been attracting attention from the viewpoint of energy density.

This bipolar lead-acid battery is formed by connecting in series a plurality of cell members assembled by alternately stacking the plurality of cell members, in each of which an electrolyte layer is interposed between a positive electrode having a positive active material layer and a negative electrode having a negative active material layer, and a plurality of frame units made of resin incorporating the cell members.

In this bipolar lead-acid battery, the electrolyte layer constituting the cell member in a cell is impregnated with an electrolytic solution. Therefore, it is necessary to prevent electrolytic solution leakage out of the cell.

For example, a conventional sealed bipolar battery assembly disclosed in PTL 1 is known as a battery assembly having a seal structure for preventing electrolytic solution leakage to the outside.

The sealed bipolar battery assembly disclosed in PTL 1 includes a casing frame in which a first current collector and a second current collector are arranged, and two end caps attached so as to mate with a top and a bottom of the casing frame, and defines an electrolytic solution region by the first current collector, the second current collector, the casing frame, and the end caps.

In order to prevent the electrolytic solution leakage to the outside, a plurality of plastic seals and adhesive seals are placed around each of the first current collector and the second current collector between the casing frame and the end caps, and the casing frame and the end caps are joined by welding joints using hot-plate welding or other welding technology.

### Citation List

### Patent Literature

PTL 1: JP 6571091 B2

### Summary of Invention

### Technical Problem

However, the conventional sealed bipolar battery assembly disclosed in PTL 1 has the following problem.

That is, in a case of the sealed bipolar battery assembly disclosed in PTL 1, as the seal structure for sealing the electrolytic solution leakage to the outside from between the casing frame and the end caps, it is necessary to place the plurality of plastic seals and adhesive seals around each of the first current collector and the second current collector between the casing frame and the end caps, and to join together the casing frame and the end caps by the welding joints using the hot-plate welding or other welding technology, which causes the problem that the seal structure is complicated.

In view of such a problem, an object of the present invention is to provide a bipolar battery and a method of manufacturing the same capable of reliably preventing electrolytic solution leakage out of a cell by means of a simple seal structure.

### Solution to Problem

In order to solve the above-described problem, the present invention provides a bipolar battery having the following configuration.
(1) The bipolar battery includes: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series.
(2) Each of the plurality of frame units is configured by a frame unit made of a light transmissive resin material.
(3) Two of the frame units made of a light transmissive resin material adjacent in the stacking direction of the cell members are welded and joined via a joining member made of a light absorbing resin material.

The present invention also provides a method of manufacturing a bipolar battery having the following configuration.
(1) There is provided the method of manufacturing a bipolar battery, the bipolar battery including: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series.
(2) The method includes a frame unit arranging step of stacking and arranging the plurality of frame units in the stacking direction of the cell members, each of the plurality of frame units being configured by a frame unit made of a light transmissive resin material.
(3) The method includes a joining member arranging step of arranging a joining member made of a light absorbing resin material between two of the frame units made of a light transmissive resin material adjacent in the stacking direction of the cell members.
(4) The method includes a joining step of welding and joining together at a welded portion the two frame units made of a light transmissive resin material adjacent in the stacking direction of the cell members, the welded portion being formed by emitting light to pass through one of the two frame units made of a light transmissive resin material to the joining member made of a light absorbing resin material, and by causing the joining member made of a light absorbing resin material and the two frame units made of a light transmissive resin material to be melted and solidified.

### Advantageous Effects of Invention

With the bipolar battery according to the present invention, each of the plurality of frame units is configured by the frame unit made of a light transmissive resin material. The two frame units made of a light transmissive resin material adjacent in the stacking direction of the cell members are welded and joined via the joining member made of a light absorbing resin material.

As a result, the two frame units made of the light transmissive resin material adjacent in the stacking direction of the cell members are sealed to eliminate a gap, and it is possible to reliably prevent electrolytic solution leakage out of the cell by means of a simple seal structure.

In addition, the joining by welding the two frame units made of the light transmissive resin material via the joining member made of the light absorbing resin material has higher airtightness than a joining method using an adhesive. Furthermore, when the two frame units made of the light transmissive resin material are joined together, burrs are less likely to be generated, and a possibility that burrs enter the cell can be reduced.

Since each of the plurality of frame units is configured by the frame unit made of the same light transmissive resin material, there is no difference in thermal expansion coefficient between the frame units, joining reliability between the two frame units made of the light transmissive resin material adjacent in the stacking direction can be improved, and it is possible to reliably prevent the electrolytic solution leakage out of the cell.

In addition, with the bipolar battery according to the present invention, each of the two frame units made of a light transmissive resin material adjacent in the stacking direction includes a joining surface extending along a direction perpendicular to the stacking direction, and the joining surfaces of the two frame units made of a light transmissive resin material adjacent in the stacking direction are welded and joined via the joining member made of a light absorbing resin material. As a result, it is possible to reliably prevent the electrolytic solution leakage out of the cell by means of the simple seal structure.

In addition, with the bipolar battery according to the present invention, each of the two frame units made of a light transmissive resin material adjacent in the stacking direction includes a joining surface extending along the stacking direction, and the joining surfaces of the two frame units made of a light transmissive resin material adjacent in the stacking direction are welded and joined via the joining member made of a light absorbing resin material. As a result, a width of the joining surface extending along the stacking direction can be made larger than a width of the joining surface extending along the direction perpendicular to the stacking direction, so that a creepage distance of the electrolytic solution leakage out of the cell can be made larger than that in a case of using the joining surface extending along the direction perpendicular to the stacking direction, and electrolytic solution sealing performance can be further improved.

In addition, with the bipolar battery according to the present invention, a resin component of the light transmissive resin material serving as a base material is a thermoplastic resin, and a resin component of the light absorbing resin material serving as a base material is a thermoplastic resin and contains a light absorbing agent. As a result, the two frame units made of the light transmissive resin material adjacent in the stacking direction of the cell members, the resin component of the light transmissive resin material serving as the base material being the thermoplastic resin, are welded and joined via the joining member made of the light absorbing resin material, the resin component of the light absorbing resin material serving as the base material being the thermoplastic resin and containing the light absorbing agent. The two frame units made of the light transmissive resin material adjacent in the stacking direction of the cell members are sealed to eliminate the gap, and it is possible to reliably prevent the electrolytic solution leakage out of the cell by means of the simple seal structure.

In addition, with the bipolar battery according to the present invention, the light transmissive resin material uses as a base material a thermoplastic resin exhibiting a transmittance between 50% and 95% inclusive with respect to light having a wavelength selected from a range between 380 nm and 2000 nm inclusive, and the light absorbing resin material contains a light absorbing agent in a thermoplastic resin as a base material, to exhibit an absorbance between 5% and 60% inclusive with respect to light having a wavelength selected from a range between 380 nm and 2000 nm inclusive. As a result, the two frame units made of the light transmissive resin material using as the base material the thermoplastic resin exhibiting the transmittance between 50% and 95% inclusive with respect to the light having the wavelength selected from the range between 380 nm and 2000 nm inclusive are joined via the joining member made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive. The two frame units made of the light transmissive resin material adjacent in the stacking direction of the cell members are sealed to eliminate the gap, and it is possible to reliably prevent the electrolytic solution leakage out of the cell by means of the simple seal structure.

In addition, with the bipolar battery according to the present invention, the thermoplastic resin contains at least one of an acrylonitrile-butadiene-styrene resin or a polypropylene resin. As a result, the two frame units made of the light transmissive resin material using as the base material the thermoplastic resin containing at least one of the acrylonitrile-butadiene-styrene resin or the polypropylene resin are joined via the joining member made of the light absorbing resin material containing the light absorbing agent in the thermoplastic resin containing at least one of the acrylonitrile-butadiene-styrene resin or the polypropylene resin. The two frame units made of the light transmissive resin material adjacent in the stacking direction of the cell members are sealed to eliminate the gap, and it is possible to reliably prevent the electrolytic solution leakage out of the cell by means of the simple seal structure.

In addition, with the bipolar battery according to the present invention, the joining member made of a light absorbing resin material has a sheet shape. As a result, the two frame units made of the light transmissive resin material adjacent in the stacking direction of the cell members are welded and joined via the sheet-shaped joining member made of the light absorbing resin material, and it is possible to reliably prevent the electrolytic solution leakage out of the cell by means of the simple seal structure.

In addition, the bipolar battery according to the present invention is a bipolar lead-acid battery in which the positive electrode has a positive-electrode lead layer and the negative electrode has a negative-electrode lead layer. As a result, in the bipolar lead-acid battery, it is possible to reliably prevent the electrolytic solution leakage out of the cell by means of the simple seal structure.

In addition, the method of manufacturing a bipolar battery according to the present invention includes: the frame unit arranging step of stacking and arranging the plurality of frame units in the stacking direction of the cell members, each of the plurality of frame units being configured by the frame unit made of a light transmissive resin material; the joining member arranging step of arranging the joining member made of a light absorbing resin material between the two frame units made of a light transmissive resin material adjacent in the stacking direction of the cell members; and the joining step of welding and joining together at the welded portion the two frame units made of a light transmissive resin material adjacent in the stacking direction of the cell members, the welded portion being formed by emitting the light to pass through one of the two frame units made of a light transmissive resin material to the joining member made of a light absorbing resin material, and by causing the joining member made of a light absorbing resin material and the two frame units made of a light transmissive resin material to be melted and solidified.

As a result, it is possible to reliably prevent electrolytic solution leakage out of the cell by means of a simple seal method using laser welding and a simple seal structure.

In addition, with the method of manufacturing a bipolar battery according to the present invention, in the joining member arranging step, the joining member made of a light absorbing resin material is arranged between joining surfaces respectively provided on the two frame units made of a light transmissive resin material adjacent in the stacking direction, the joining surfaces extending along a direction perpendicular to the stacking direction, and in the joining step, the joining surfaces of the two frame units made of a light transmissive resin material adjacent in the stacking direction are joined at the welded portion. As a result, the two frame units made of the light transmissive resin material adjacent in the stacking direction can be joined by joining the joining surfaces extending in the direction perpendicular to the stacking direction at the welded portion by laser welding, and it is possible to reliably prevent the electrolytic solution leakage out of the cell by means of the simple seal method and the simple seal structure.

In addition, with the method of manufacturing a bipolar battery according to the present invention, in the joining member arranging step, the joining member made of a light absorbing resin material is arranged between joining surfaces respectively provided on the two frame units made of a light transmissive resin material adjacent in the stacking direction, the joining surfaces extending along the stacking direction, and in the joining step, the joining surfaces of the two frame units made of a light transmissive resin material adjacent in the stacking direction are joined at the welded portion. As a result, a width of the joining surface extending along the stacking direction can be made larger than a width of the joining surface extending along the direction perpendicular to the stacking direction, so that a creepage distance of the electrolytic solution leakage out of the cell can be made larger than that in a case of using the joining surface extending along the direction perpendicular to the stacking direction, and electrolytic solution sealing performance can be further improved.

In addition, with the method of manufacturing a bipolar battery according to the present invention, the joining member made of a light absorbing resin material has a sheet shape. As a result, in the joining member arranging step, the sheet-shaped joining member made of the light absorbing resin material is arranged between the two frame units made of the light transmissive resin material adjacent in the stacking direction of the cell members, and in the joining step, the two frame units made of the light transmissive resin material adjacent in the stacking direction of the cell members are welded and joined at the welded portion formed by emitting the light to pass through one of the two frame units made of the light transmissive resin material to the sheet-shaped joining member made of the light absorbing resin material, and by causing the joining member made of the light absorbing resin material and the two frame units made of the light transmissive resin material to be melted and solidified. It is possible to reliably prevent the electrolytic solution leakage out of the cell by means of the simple seal method using laser welding and the simple seal structure.

### Brief Description of Drawings

FIG. 1 is a cross-sectional view illustrating a schematic configuration of a bipolar battery according to a first embodiment of the present invention;
FIG. 2 is a drawing for explaining a joining method of the bipolar battery illustrated in FIG. 1;
FIG. 3 is a cross-sectional view illustrating a schematic configuration of a bipolar battery according to a second embodiment of the present invention; and
FIG. 4 is a drawing for explaining a joining method of the bipolar battery illustrated in FIG. 3.

### Description of Embodiments

Although embodiments of a bipolar battery according to the present invention will be described on the basis of the drawings, the present invention is not limited to the following embodiments described on the basis of the drawings.

### (First Embodiment)

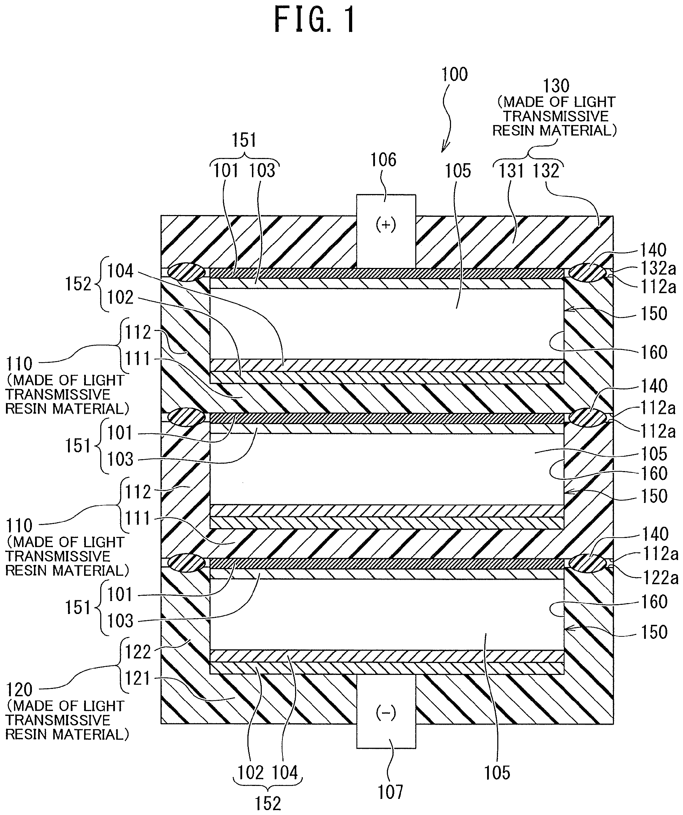

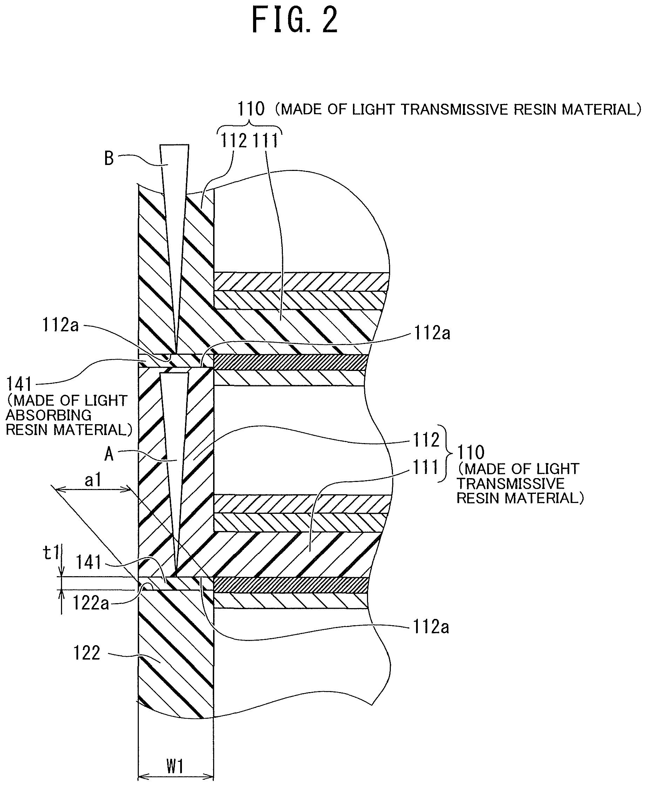

A bipolar battery and a method of manufacturing the same according to a first embodiment of the present invention will be described with reference to FIGS. 1 and 2.

A bipolar (bipolar) storage battery 100 according to the first embodiment of the present invention illustrated in FIG. 1 is a bipolar lead-acid battery in which a positive electrode 151 has a positive-electrode lead layer 101 and a negative electrode 152 has a negative-electrode lead layer 102, and includes a plurality of cell members 150, a plurality of internal frame units (frame units) 110, a first end frame unit (frame unit) 120, and a second end frame unit (frame unit) 130.

The plurality of cell members 150 are arranged to be stacked at intervals in a stacking direction (vertical direction in FIG. 1).

The plurality of internal frame units 110, the first end frame unit 120, and the second end frame unit 130 respectively form a plurality of cells (spaces) 160 respectively incorporating the plurality of cell members 150.

Each of the internal frame units 110 includes a substrate (bipolar plate) 111 having a rectangular planar shape, in which the positive electrode 151 is disposed on one surface and the negative electrode 152 is disposed on the other surface, and a rim 112 having a quadrangular frame shape provided on an outer peripheral edge of the substrate 111. The substrate 111 of each of the internal frame units 110 is arranged between the cell members 150 adjacent in the stacking direction (vertical direction in FIG. 1) of the cell members 150. The rims 112 of the internal frame units 110 respectively include joining surfaces 112a facing each other in the stacking direction (vertical direction in FIG. 1) of the cell members 150 and extending along a direction perpendicular to the stacking direction.

The substrate 111 is integrated with the inside of the rim 112. The substrate 111 is positioned at one end (lower end) of the rim 112 in a thickness direction (vertical direction in FIG. 1) of the rim 112. The rim 112 has a larger thickness than a thickness of the substrate 211.

The first end frame unit 120 includes a first end plate 121 having a rectangular planar shape, and a rim 122 having a quadrangular frame shape provided on an outer periphery of the first end plate 121. The first end frame unit 120 surrounds the negative electrode 152 of the cell member 150 and a side surface of the cell member 150, on one end side (lower end side in FIG. 1) of the bipolar battery 100. The first end plate 121 surrounds the negative electrode 152 of the cell member 150, and the rim 122 surrounds the side surface of the cell member 150.

The first end plate 121 of the first end frame unit 120 is arranged in parallel with the substrates 111 of the internal frame units 110, and the rim 122 is arranged so as to be in contact with the rim 112 of the internal frame unit 110 positioned adjacent thereto. That is, the rim 122 includes a joining surface 122a facing the rim 112 of the internal frame unit 110 in the stacking direction (vertical direction in FIG. 1) of the cell members 150, and extending along the direction perpendicular to the stacking direction. The first end plate 121 has a thickness larger than the thickness of the substrate 111. The rim 122 has a thickness larger than the thickness of the first end plate 121, and the first end plate 121 is integrated with the inside of the rim 122. The first end plate 121 is positioned at one end (lower end) of the rim 122 in a thickness direction (vertical direction in FIG. 1) of the rim 122.

The second end frame unit 130 includes a second end plate 131 having a rectangular planar shape, and a rim 132 having a quadrangular frame shape provided around the second end plate 131. The second end plate 131 is integrated with the inside of the rim 132. The second end frame unit 130 surrounds the positive electrode 151 of the cell member 150 on the other end side (upper end side in FIG. 1) of the bipolar battery 100.

The second end plate 131 is arranged in parallel with the substrates 111 of the internal frame units 110, and the rim 132 is arranged so as to be in contact with the rim 112 of the internal frame unit 110 positioned adjacent thereto. That is, the rim 132 includes a joining surface 132a facing the rim 112 of the internal frame unit 110 in the stacking direction (vertical direction in FIG. 1) of the cell members 150, and extending in the direction perpendicular to the stacking direction.

The second end plate 131 has a thickness larger than the thickness of the substrate 111. The rim 132 has the same thickness as the thickness of the second end plate 131.

The positive-electrode lead layer 101 is disposed on one surface of the substrate 111. The negative-electrode lead layer 102 is disposed on the other surface of the substrate 111. A positive active material layer 103 is disposed on the positive-electrode lead layer 101. A negative active material layer 104 is disposed on the negative-electrode lead layer 102.

An electrolyte layer 105 made of a glass fiber mat or the like impregnated with an electrolytic solution such as sulfuric acid is disposed between the positive active material layer 103 and the negative active material layer 104 facing each other.

The negative-electrode lead layer 102 is disposed on the other surface of the first end plate 121. The negative active material layer 104 is disposed on the negative-electrode lead layer 102 on the first end plate 121. The electrolyte layer 105 made of a glass fiber mat or the like impregnated with an electrolytic solution such as sulfuric acid is disposed between the negative active material layer 104 on the first end plate 121 and the facing positive active material layer 103 of the substrate 211.

The positive-electrode lead layer 101 is disposed on one surface of the second end plate 131. The positive active material layer 103 is disposed on the positive-electrode lead layer 101 on the second end plate 131. The electrolyte layer 105 made of a glass fiber mat or the like impregnated with an electrolytic solution such as sulfuric acid is disposed between the positive active material layer 103 on the second end plate 131 and the facing negative active material layer 104 of the substrate 111.

The negative-electrode lead layer 102 on the first end plate 121 is provided with a negative electrode terminal 107 that is electrically connected with the outside of the first end plate 121. The positive-electrode lead layer 101 on the second end plate 131 is provided with a positive electrode terminal 106 that is electrically connected with the outside of the second end plate 131.

That is, the bipolar battery 100 according to the first embodiment includes: the plurality of cell members 150, each including the positive electrode 151 having the positive active material layer 103, the negative electrode 152 having the negative active material layer 104, and the electrolyte layer 105 interposed between the positive electrode 151 and the negative electrode 152, the plurality of cell members 150 being arranged to be stacked at intervals; and the plurality of frame units (the plurality of internal frame units 110, the first end frame unit 120, and the second end frame unit 130) respectively forming the plurality of cells 160 respectively incorporating the plurality of cell members 150.

The cell members 150 adjacent in the stacking direction are electrically connected in series. Therefore, the substrate 111 interposed between the cell members 150 adjacent in the stacking direction includes means of electrically connecting the positive-electrode lead layer 101 and the negative-electrode lead layer 102.

In the bipolar battery 100 according to the first embodiment, each of the plurality of frame units (the plurality of internal frame units 110, the first end frame unit 120, and the second end frame unit 130) is configured by a frame unit made of a light transmissive resin material.

Specifically, the first end frame unit 120 at one end (lower end in FIG. 1) in the stacking direction (vertical direction in FIG. 1) is a frame unit made of a light transmissive resin material, the internal frame unit 110 adjacent to the first end frame unit 120 in the stacking direction is a frame unit made of a light transmissive resin material, the other internal frame unit 110 adjacent to the internal frame unit 110 in the stacking direction is a frame unit made of a light transmissive resin material, and the second end frame unit 130 at the other end (upper end in FIG. 1) in the stacking direction adjacent to the other internal frame unit 110 in the stacking direction is a frame unit made of a light transmissive resin material.

Here, a resin component of the light transmissive resin material serving as a base material is a thermoplastic resin, and the thermoplastic resin that exhibits a transmittance between 50% and 95% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive) is used as the base material.

In addition, a resin component of a light absorbing resin material to be described later serving as a base material is a thermoplastic resin, and contains a light absorbing agent, and the thermoplastic resin serving as the base material contains the light absorbing agent so as to exhibit an absorbance between 5% and 60% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive).

Examples of the thermoplastic resin applicable as the light transmissive resin material and the light absorbing resin material include ABS resin (acrylonitrile butadiene styrene resin), PC (polycarbonate), PS (polystyrene), PMMA (acrylic resin), COP (cyclic polyolefin), PE (polyethylene), PP (polypropylene), PVC (polyvinyl chloride), PBT (polybutylene terephthalate), POM (polyacetal), and PPS (polyphenylene sulfide), and PP and ABS are particularly preferable.

Although the light transmissive resin material and the light absorbing resin material may use different thermoplastic resins as their base materials, it is preferable to use the same thermoplastic resin because there is no difference in melting point and thermal expansion coefficient, and joining reliability is increased.

As the light absorbing agent, for example, conventionally known dyes, pigments, and the like can be used, and examples thereof include a cyanine compound, a phthalocyanine compound, a dithiol metal complex, a naphthoquinone compound, a diimmonium compound, an azo compound, a naphthalocyanine compound, a nickel dithiolene complex, a squarylium dye, a quinone-based compound, quinacridone, dioxane, benzimidazolone, carbon black, titanium oxide, a ferrite compound such as nickel-iron ferrite, manganese-zinc ferrite, nickel-zinc ferrite, or copper-zinc ferrite, nickel, iron particles, gold particles, and copper particles. One of these components can be used singly, or two or more of them can be used in combination.

In particular, in a case where light (laser beam) in a visible light region (approximately between 380 nm and 780 nm inclusive) is used, for example, a phthalocyanine compound, quinacridone, dioxane, benzimidazolone, titanium oxide, gold particles, copper particles, or the like is preferably applied as the light absorbing agent. In a case where light (laser beam) in a near-infrared region (approximately between 780 nm and 2000 nm inclusive) is used, for example, a phthalocyanine compound, nickel, iron particles, manganese-zinc ferrite, nickel-zinc ferrite, copper-zinc ferrite, titanium oxide, or the like is preferably applied as the light absorbing agent.

As the light absorbing agent, any shape such as a spherical form, a powdery form, or a granular form can be used as well as a particulate form. An average particle size of the light absorbing agent is preferably within a range of approximately 0.01 to 2 um. For measurement of the average particle size, for example, a primary particle size of the light absorbing agent in an observation sample may be measured at a predetermined magnification (for example, 100,000 times) using a transmission electron microscope, and an average value thereof may be used. In a case where the shape of the light absorbing agent is not spherical, a major axis and a minor axis may be measured, and a value calculated by (the sum of the major axis and the minor axis)/2 may be used as the average particle size.

In the bipolar battery 100 according to the first embodiment, the two frame units 120 and 110, 110 and 110, and 110 and 130 made of the light transmissive resin material adjacent in the stacking direction (vertical direction in FIG. 1) of the cell members 150 are melted and solidified at welded portions 140, 140, and 140 via joining members 141 (see FIG. 2) made of the light absorbing resin material, to be welded and joined together. As illustrated in FIG. 2, the joining members 141 made of the light absorbing resin material have a sheet shape.

Specifically, in order from one side to the other side in the stacking direction (from a lower side to an upper side in FIG. 1), the joining surface 122a provided on the rim 122 of the first end frame unit (frame unit made of the light transmissive resin material) 120 and the joining surface 112a provided on the rim 112 of the internal frame unit (unit made of the light transmissive resin material) 110 adjacent in the stacking direction are joined at the welded portion 140. The welded portion 140 is formed over an entire periphery of the rims 122 and 112.

In addition, the joining surface 112a provided on the 112 of the internal frame unit (frame unit made of the light transmissive resin material) 110 and the joining surface 112a provided on the rim 112 of the other internal frame unit (frame unit made of the light transmissive resin material) 110 adjacent to the internal frame unit (frame unit made of the light transmissive resin material) 110 in the stacking direction are joined at the welded portion 140. The welded portion 140 is formed over an entire periphery of the rims 112 and 112.

Furthermore, the joining surface 112a provided on the rim 112 of the other internal frame unit (frame unit made of the light transmissive resin material) 110 and the joining surface 132a provided on the rim 132 of the second end frame unit (frame unit made of the light transmissive resin material) 130 adjacent to the other internal frame unit (frame unit made of the light transmissive resin material) 110 in the stacking direction are joined at the welded portion 140. The welded portion 140 is formed over an entire periphery of the rims 112 and 132.

Here, as described above, the two frame units 120 and 110, 110 and 110, and 110 and 130 made of the light transmissive resin material are melted and solidified at the respective welded portions 140 via the joining members 141 (see FIG. 2) made of the light absorbing resin material, to be welded and joined together. The light absorbing resin material is as described above.

When the bipolar battery 100 is manufactured, first, the joining member 141 made of the light absorbing resin material is arranged on the joining surface 122a provided on the rim 122 of the first end frame unit (frame unit made of the light transmissive resin material) 120 on the one side (lowermost side in FIGS. 1 and 2) as a lowermost layer in the stacking direction, and the internal frame unit (frame unit made of the light transmissive resin material) 110 is further arranged on the joining member 141 made of the light absorbing resin material.

Next, as illustrated in FIG. 2, a laser beam A is emitted to pass through the rim 122 of the first end frame unit (frame unit made of the light transmissive resin material) 120 to the joining member 141 made of the light absorbing resin material from above the rim 122. As a result, the first end frame unit (frame unit made of the light transmissive resin material) 120 and the internal frame unit (frame unit made of the light transmissive resin material) 110 are melted and solidified via the joining member 141 made of the light absorbing resin material, to be joined at the welded portion 140.

Another joining member 141 made of the light absorbing resin material is arranged on the joining surface 112a provided on the rim 112 of the internal frame unit (frame unit made of the light transmissive resin material) 110, and the other internal frame unit (frame unit made of the light transmissive resin material) 110 is further arranged on the joining member 141 made of the light absorbing resin material.

Next, as illustrated in FIG. 2, a laser beam B is emitted to pass through the rim 112 of the other internal frame unit (frame unit made of the light transmissive resin material) 110 to the joining member 141 made of the light absorbing resin material from above the rim 112. As a result, the two internal frame units (frame units made of the light transmissive resin material) 110 are melted and solidified via the joining member 141 made of the light absorbing resin material, to be joined at the welded portion 140.

Lastly, another joining member 141 made of the light absorbing resin material is arranged on the joining surface 112a provided on the rim 112 of the internal frame unit (frame unit made of the light transmissive resin material) 110, and the second end frame unit (frame unit made of the light transmissive resin material) 130 is further arranged on the joining member 141 made of the light absorbing resin material.

Although not illustrated in the drawings, a laser beam is emitted to pass through the rim 132 of the second end frame unit (frame unit made of the light transmissive resin material) 130 to the joining member 141 made of the light absorbing resin material from above the rim 132. As a result, the second end frame unit (frame unit made of the light transmissive resin material) 130 and the internal frame unit (frame unit made of the light transmissive resin material) 110 are melted and solidified via the joining member 141 made of the light absorbing resin material, to be joined at the welded portion 140.

The bipolar battery 100 is completely manufactured by injecting the electrolytic solution of the electrolyte layer 105 into the cell 160 through an injection port (not illustrated) after joining together the frame units 110, 120, and 130 as described above.

That is, the method of manufacturing the bipolar battery 100 includes a frame unit arranging step of stacking and arranging the plurality of frame units (the plurality of internal frame units 110, the first end frame unit 120, and the second end frame unit 130) in the stacking direction of the cell members 150, each of the plurality of frame units being configured by the frame unit made of the light transmissive resin material. The method of manufacturing the bipolar battery 100 also includes a joining member arranging step of arranging the joining members 141 made of the light absorbing resin material between the two frame units 120 and 110, 110 and 110, and 110 and 130 made of the light transmissive resin material adjacent in the stacking direction of the cell members 150. The method of manufacturing the bipolar battery 100 further includes a joining step of welding and joining together at the welded portions 140 the two frame units 120 and 110, 110 and 110, and 110 and 130 made of the light transmissive resin material adjacent in the stacking direction of the cell members 150, the welded portions 140 being formed by emitting the laser beams to pass through one (110, 110, and 130) of the two frame units 120 and 110, 110 and 110, and 110 and 130 made of the light transmissive resin material to the joining members 141, 141, and 141 made of the light absorbing resin material, and by causing the joining members 141, 141, and 141 made of the light absorbing resin material and the two frame units 120 and 110, 110 and 110, and 110 and 130 made of the light transmissive resin material to be melted and solidified.

Here, the respective joining members 141 made of the light absorbing resin material are formed in a quadrangular frame shape such that the respective welded portions 140 are formed over the entire peripheries of the rims 122 and 112, 112 and 112, and 112 and 132. A width a1 of each of the joining members 141 made of the light absorbing resin material in the direction perpendicular to the stacking direction is preferably determined as appropriate in consideration of a width W1 of each of the joining surfaces 112a, 122a, and 132a and a joining strength of each of the welded portions 140. In addition, a thickness t1 of each of the joining members 141 made of the light absorbing resin material in the stacking direction is preferably determined as appropriate in consideration of the joining strength of each of the welded portions 140.

In addition, it is preferable that a region irradiated with the laser beam in the direction perpendicular to the stacking direction is substantially an entire region of the width a1 of each of the joining members 141 made of the light absorbing resin material in the direction perpendicular to the stacking direction.

Moreover, the laser beam preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

As described above, with the bipolar battery 100 according to the first embodiment, each of the plurality of frame units (the plurality of internal frame units 110, the first end frame unit 120, and the second end frame unit 130) is configured by the frame unit made of the light transmissive resin material.

The two frame units 120 and 110, 110 and 110, and 110 and 130 made of the light transmissive resin material adjacent in the stacking direction of the cell members 150 are melted and solidified at the welded portions 140, 140, and 140 via the joining members 141 (see FIG. 2) made of the light absorbing resin material, to be welded and joined together.

As a result, the two frame units 120 and 110, 110 and 110, and 110 and 130 made of the light transmissive resin material adjacent in the stacking direction of the cell members 150 are welded and joined at the welded portions 140, 140, and 140 via the joining members 141 (see FIG. 2) made of the light absorbing resin material, so that the two frame units 120 and 110, 110 and 110, and 110 and 130 made of the light transmissive resin material are sealed to eliminate a gap, and it is possible to reliably prevent electrolytic solution leakage out of the cells 160 by means of a simple seal structure.

In addition, the welded portions 140, 140, and 140 at which the two frame units 120 and 110, 110 and 110, and 110 and 130 made of the light transmissive resin material are melted and solidified via the joining members 141 made of the light absorbing resin material to be welded and joined together have higher airtightness than a joining method using an adhesive. Furthermore, when the two frame units 120 and 110, 110 and 110, and 110 and 130 made of the light transmissive resin material are joined together, burrs are less likely to be generated, and a possibility that burrs enter the cells 160 can be reduced.

Since all of the plurality of frame units 110, 120, and 130 are configured by the frame units made of the same light transmissive resin material, there is no difference in thermal expansion coefficient between the frame units, the joining reliability by the welded portions 140, 140, and 140 can be improved, and it is possible to reliably prevent the electrolytic solution leakage out of the cells 160.

In addition, with the bipolar battery 100 according to the first embodiment, the two frame units 120 and 110, 110 and 110, and 110 and 130 made of the light transmissive resin material adjacent in the stacking direction respectively include the joining surfaces 122a and 112a, 112a and 112a, and 112a and 132a extending along the direction perpendicular to the stacking direction, and the joining surfaces 122a and 112a, 112a and 112a, and 112a and 132a of the two frame units 120 and 110, 110 and 110, and 110 and 130 made of the light transmissive resin material adjacent in the stacking direction are melted and solidified at the welded portions 140, 140, and 140 via the joining members 141 made of the light absorbing resin material, to be welded and joined together. As a result, the joining surfaces 122a and 112a, 112a and 112a, and 112a and 132a of the two frame units 120 and 110, 110 and 110, and 110 and 130 made of the light transmissive resin material adjacent in the stacking direction, the joining surfaces extending in the direction perpendicular to the stacking direction, can be joined at the welded portions 140, 140, and 140, and it is possible to reliably prevent the electrolytic solution leakage out of the cells 160 by means of the simple seal structure.

In addition, with the bipolar battery according to the first embodiment, the resin component of the light transmissive resin material serving as the base material is the thermoplastic resin, and the resin component of the light absorbing resin material serving as the base material is the thermoplastic resin and contains the light absorbing agent. As a result, the two frame units 120 and 110, 110 and 110, and 110 and 130 made of the light transmissive resin material adjacent in the stacking direction of the cell members 150, the resin component of the light transmissive resin material serving as the base material being the thermoplastic resin, are welded and joined via the joining members 141 made of the light absorbing resin material, the resin component of the light absorbing resin material serving as the base material being the thermoplastic resin and containing the light absorbing agent. The two frame units 120 and 110, 110 and 110, and 110 and 130 made of the light transmissive resin material adjacent in the stacking direction of the cell members 150 are sealed to eliminate the gap, and it is possible to reliably prevent the electrolytic solution leakage out of the cells 160 by means of the simple seal structure.

In addition, with the bipolar battery 100 according to the first embodiment, the light transmissive resin material uses as the base material the thermoplastic resin exhibiting the transmittance between 50% and 95% inclusive with respect to the light having the wavelength selected from the range between 380 nm and 2000 nm inclusive, and the light absorbing resin material contains the light absorbing agent in the thermoplastic resin as the base material so as to exhibit the absorbance between 5% and 60% inclusive with respect to the light having the wavelength selected from the range between 380 nm and 2000 nm inclusive. As a result, the two frame units 120 and 110, 110 and 110, and 110 and 130 made of the light transmissive resin material using as the base material the thermoplastic resin exhibiting the transmittance between 50% and 95% inclusive with respect to the light having the wavelength selected from the range between 380 nm and 2000 nm inclusive are joined via the joining members 141 made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive. The two frame units 120 and 110, 110 and 110, and 110 and 130 made of the light transmissive resin material adjacent in the stacking direction of the cell members 150 are sealed to eliminate the gap, and it is possible to reliably prevent the electrolytic solution leakage out of the cells 160 by means of the simple seal structure.

In addition, with the bipolar battery 100 according to the first embodiment, the thermoplastic resin contains at least one of the acrylonitrile-butadiene-styrene resin or the polypropylene resin. As a result, the two frame units 120 and 110, 110 and 110, and 110 and 130 made of the light transmissive resin material using as the base material the thermoplastic resin containing at least one of the acrylonitrile-butadiene-styrene resin or the polypropylene resin are joined via the joining members 141 made of the light absorbing resin material containing the light absorbing agent in the thermoplastic resin containing at least one of the acrylonitrile-butadiene-styrene resin or the polypropylene resin. The two frame units 120 and 110, 110 and 110, and 110 and 130 made of the light transmissive resin material adjacent in the stacking direction of the cell members 150 are sealed to eliminate the gap, and it is possible to reliably prevent the electrolytic solution leakage out of the cells 160 by means of the simple seal structure.

In addition, with the bipolar battery 100 according to the first embodiment, the joining members 141 made of the light absorbing resin material have a sheet shape. As a result, the two frame units 120 and 110, 110 and 110, and 110 and 130 made of the light transmissive resin material adjacent in the stacking direction of the cell members 150 are welded and joined via the sheet-shaped joining members 141 made of the light absorbing resin material, and it is possible to reliably prevent the electrolytic solution leakage out of the cells 160 by means of the simple seal structure.

In addition, the method of manufacturing the bipolar battery 100 according to the first embodiment includes: the frame unit arranging step of stacking and arranging the plurality of frame units 110, 120, and 130 in the stacking direction of the cell members 150, each of the plurality of frame units 110, 120, and 130 being configured by the frame unit made of the light transmissive resin material; the joining member arranging step of arranging the joining members 141, 141, and 141 made of the light absorbing resin material between the two frame units 120 and 110, 110 and 110, and 110 and 130 made of the light transmissive resin material adjacent in the stacking direction of the cell members 150; and the joining step of welding and joining together at the welded portions 140, 140, and 140 the two frame units 120 and 110, 110 and 110, and 110 and 130 made of the light transmissive resin material adjacent in the stacking direction of the cell members 150, the welded portions 140, 140, and 140 being formed by emitting the laser beams to pass through one (110, 110, and 130) of the two frame units 120 and 110, 110 and 110, and 110 and 130 made of the light transmissive resin material to the joining members 141, 141, and 141 made of the light absorbing resin material, and by causing the joining members 141, 141, and 141 made of the light absorbing resin material and the two frame units 120 and 110, 110 and 110, and 110 and 130 made of the light transmissive resin material to be melted and solidified.

As a result, it is possible to reliably prevent electrolytic solution leakage out of the cells 160 by means of a simple seal method using laser welding and a simple seal structure.

In addition, with the method of manufacturing the bipolar battery according to the first embodiment, in the joining member arranging step, the joining members 141, 141, and 141 made of the light absorbing resin material are arranged between the joining surfaces 122a and 112a, 112a and 112a, and 112a and 132a respectively provided on the two frame units 120 and 110, 110 and 110, and 110 and 130 made of the light transmissive resin material adjacent in the stacking direction, the joining surfaces 122a and 112a, 112a and 112a, and 112a and 132a extending along the direction perpendicular to the stacking direction. In the joining step, the joining surfaces 122a and 112a, 112a and 112a, and 112a and 132a of the two frame units 120 and 110, 110 and 110, and 110 and 130 made of the light transmissive resin material adjacent in the stacking direction are joined at the welded portions 140, 140, and 140. As a result, the joining surfaces 122a and 112a, 112a and 112a, and 112a and 132a of the two frame units 120 and 110, 110 and 110, and 110 and 130 made of the light transmissive resin material adjacent in the stacking direction, the joining surfaces 122a and 112a, 112a and 112a, and 112a and 132a extending in the direction perpendicular to the stacking direction, can be joined at the welded portions 140, 140, and 140 by laser welding, and it is possible to reliably prevent the electrolytic solution leakage out of the cells 160 by means of the simple seal method and the simple seal structure.

In addition, with the method of manufacturing the bipolar battery according to the first embodiment, the joining members 141 made of the light absorbing resin material have a sheet shape. As a result, in the joining member arranging step, the sheet-shaped joining members 141, 141, and 141 made of the light absorbing resin material are arranged between the two frame units 120 and 110, 110 and 110, and 110 and 130 made of the light transmissive resin material adjacent in the stacking direction of the cell members 150, and in the joining step, the two frame units 120 and 110, 110 and 110, and 110 and 130 made of the light transmissive resin material adjacent in the stacking direction of the cell members 150 are welded and joined at the welded portions formed by emitting the laser beams to pass through one (120 and 110, 110 and 110, and 110 and 130) of the two frame units 120 and 110, 110 and 110, and 110 and 130 made of the light transmissive resin material to the sheet-shaped joining members 141, 141, and 141 made of the light absorbing resin material, and by causing the joining members 141, 141, and 141 made of the light absorbing resin material and the two frame units 120 and 110, 110 and 110, and 110 and 130 made of the light transmissive resin material to be melted and solidified. It is possible to reliably prevent the electrolytic solution leakage out of the cells 160 by means of the simple seal method using laser welding and the simple seal structure.

### (Second Embodiment)

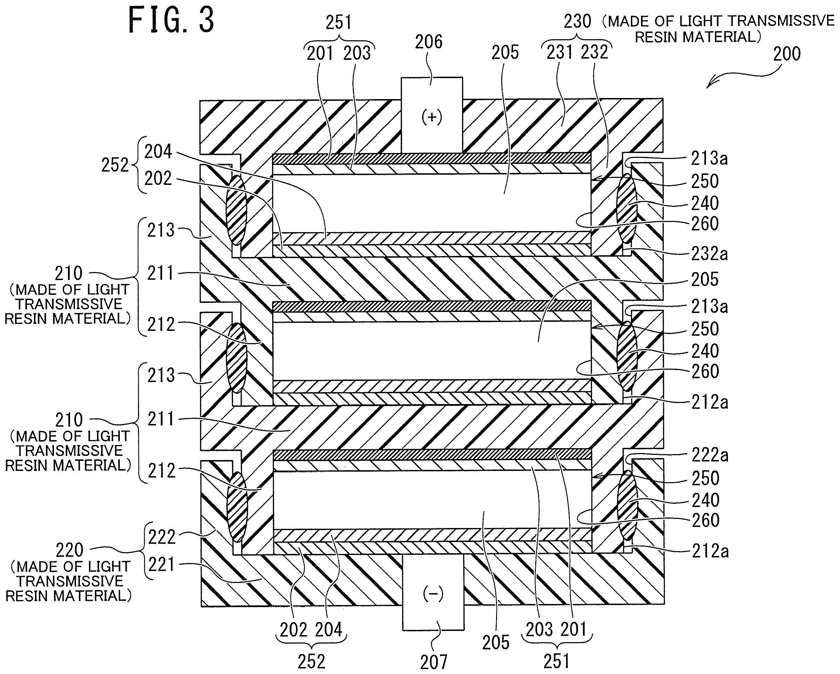

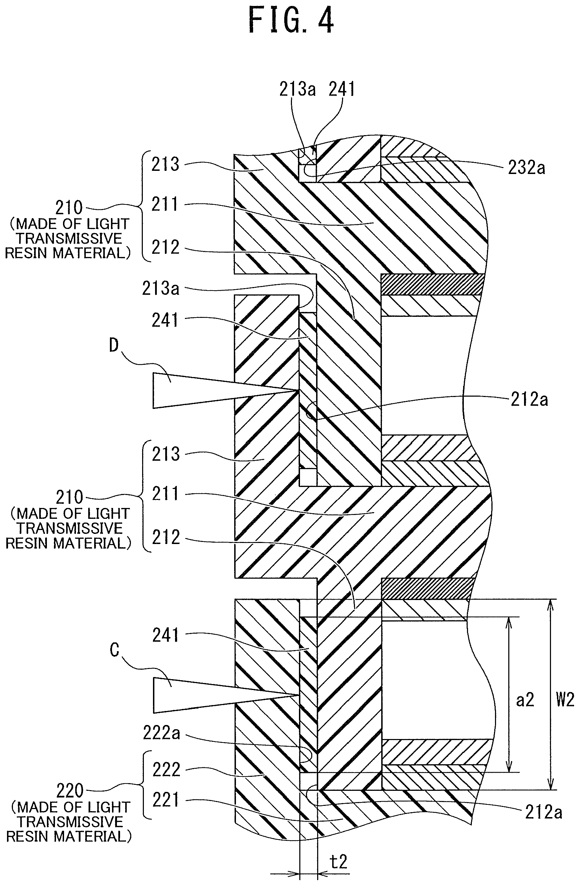

A bipolar battery and a method of manufacturing the same according to a second embodiment of the present invention will be described with reference to FIGS. 3 and 4.

A bipolar (bipolar) storage battery 200 according to the second embodiment of the present invention illustrated in FIG. 3 is a bipolar lead-acid battery in which a positive electrode 251 has a positive-electrode lead layer 201 and a negative electrode 252 has a negative-electrode lead layer 202, and includes a plurality of cell members 250, a plurality of internal frame units (frame units) 210, a first end frame unit (frame unit) 220, and a second end frame unit (frame unit) 230.

The plurality of cell members 250 are arranged to be stacked at intervals in a stacking direction (vertical direction in FIG. 3).

The plurality of internal frame units 210, the first end frame unit 220, and the second end frame unit 230 respectively form a plurality of cells (spaces) 260 respectively incorporating the plurality of cell members 250.

Each of the internal frame units 210 includes a substrate (bipolar plate) 211 having a rectangular planar shape, in which the positive electrode 251 is disposed on one surface and the negative electrode 252 is disposed on the other surface, a first rim 212 having a quadrangular shape provided at a position away from an outer peripheral edge of the substrate 211 toward an inner peripheral side by a predetermined distance, and a second rim 213 having a quadrangular shape provided on the outer peripheral edge of the substrate 211. The substrate 211 is arranged between the cell members 250 adjacent in the stacking direction (vertical direction in FIG. 3) of the cell members 250. The first rim 212 is formed thicker than the substrate 211 in the stacking direction, and is formed so as to protrude from a surface on one side (lower side in FIG. 3) of the substrate 211 at the position away from the outer peripheral edge of the substrate 211 toward the inner peripheral side by the predetermined distance. In addition, the second rim 213 is formed thicker than the substrate 211 in the stacking direction, and is formed so as to protrude to the other side (upper side in FIG. 3) of the substrate 211 on the outer peripheral edge of the substrate 211. A protrusion height of the first rim 212 from the substrate 211 and a protrusion height of the second rim 213 from the substrate 211 are the same. The substrate 211, the first rim 212, and the second rim 213 are integrated together.

The first rim 212 of one (upper one in FIG. 3) of the internal frame units 210 adjacent in the stacking direction is arranged inside the second rim 213 of the other (lower one in FIG. 3) of the internal frame units 210 such that its outer side surface faces an inner side surface of the second rim 213 of the other of the internal frame units 210. The first rims 212 of the internal frame units 210 surround side surfaces of the cell members 250.

The outer side surface of the first rim 212 of the one (upper one in FIG. 3) internal frame unit 210 facing the inner side surface of the second rim 213 of the other (lower one in FIG. 3) internal frame unit 210 serves as a joining surface 212a. In addition, the inner side surface of the second rim 213 of the other (lower one in FIG. 3) internal frame unit 210 facing the outer side surface of the first rim 212 of the one (upper one in FIG. 3) internal frame unit 210 serves as a joining surface 213a.

These joining surfaces 212a and 213a extend along the stacking direction of the cell members 250.

In addition, the first end frame unit 220 includes a first end plate 221 having a rectangular planar shape, and a rim 222 having a quadrangular shape provided on an outer periphery of the first end plate 221. The first end frame unit 220 surrounds the negative electrode 252 of the cell member 250 and an outer side surface of the first rim 212 of the above-described other internal frame unit 210 positioned adjacent thereto in the stacking direction, on one end side (lower end side in FIG. 3) of the bipolar battery 200. The first end plate 221 surrounds the negative electrode 252 of the cell member 250, and the rim 222 surrounds the outer side surface of the first rim 212 of the internal frame unit 210.

The first end plate 221 has substantially the same thickness as the substrate 211. The rim 222 is formed thicker than the first end plate 221 in the stacking direction, and is formed so as to protrude from an outer peripheral edge of the first end plate 221 toward the other side (upper side in FIG. 3) of the first end plate 221. The first end plate 221 and the rim 222 are integrated together.

The first end plate 221 of the first end frame unit 220 is arranged in parallel with the substrate 211 of the internal frame unit 210 positioned adjacent thereto in the stacking direction, and the rim 222 is arranged so as to face the outer side surface of the first rim 212 of the internal frame unit 210. A surface of the rim 222 of the first end frame unit 220 facing the outer side surface of the first rim 212 of the internal frame unit 210 serves as a joining surface 222a. In addition, the surface of the first rim 212 of the internal frame unit 210 facing the inner side surface of the rim 222 of the first end frame unit 220 serves as the joining surface 212a. These joining surfaces 222a and 212a extend along the stacking direction of the cell members 250.

In addition, the second end frame unit 230 includes a second end plate 231 having a rectangular planar shape, and a rim 232 having a quadrangular shape provided at a position away from an outer peripheral edge of the second end plate 231 toward an inner peripheral side by a predetermined distance. The second end frame unit 230 surrounds the positive electrode 251 of the cell member 250 and a side surface of the cell member 250, on the other end side (upper end side in FIG. 3) of the bipolar battery 200. The second end plate 231 surrounds the positive electrode 251 of the cell member 250, and the rim 232 surrounds the side surface of the cell member 250.

The second end plate 231 has substantially the same thickness as the substrate 211. The rim 232 is formed thicker than the second end plate 231 in the stacking direction, and is formed so as to protrude from a surface on one side (lower side in FIG. 3) of the second end plate 231 at the position away from the outer peripheral edge of the second end plate 231 toward the inner peripheral side by the predetermined distance. The second end plate 231 and the rim 232 are integrated together.

The second end plate 231 of the second end frame unit 230 is arranged in parallel with the substrate 211 of the internal frame unit 210 positioned adjacent thereto in the stacking direction, and the rim 232 is arranged so as to face an inner side surface of the second rim 213 of the internal frame unit 210. A surface of the rim 232 of the second end frame unit 230 facing the inner side surface of the second rim 213 of the internal frame unit 210 serves as a joining surface 232a. In addition, the surface of the second rim 213 of the internal frame unit 210 facing the outer side surface of the rim 232 of the second end frame unit 230 serves as the joining surface 213a. These joining surfaces 232a and 213a extend along the stacking direction of the cell members 250.

The positive-electrode lead layer 201 is disposed on one surface (lower surface in FIG. 3) of the substrate 211 of the internal frame unit 210. The negative-electrode lead layer 202 is disposed on the other surface of the substrate 211. A positive active material layer 203 is disposed on the positive-electrode lead layer 201. A negative active material layer 204 is disposed on the negative-electrode lead layer 202.

An electrolyte layer 205 made of a glass fiber mat or the like impregnated with an electrolytic solution such as sulfuric acid is disposed between the positive active material layer 203 and the negative active material layer 204 facing each other.

The negative-electrode lead layer 202 is also disposed on the other surface of the first end plate 221 of the first end frame unit 220. The negative active material layer 204 is disposed on the negative-electrode lead layer 202 of the first end plate 221. The electrolyte layer 205 made of a glass fiber mat or the like impregnated with an electrolytic solution such as sulfuric acid is disposed between the negative active material layer 204 on the first end plate 221 and the facing positive active material layer 203 of the substrate 211.

The positive-electrode lead layer 201 is also disposed on one surface (lower surface in FIG. 3) of the second end plate 231 of the second end frame unit 230. The positive active material layer 203 is disposed on the positive-electrode lead layer 201 on the second end plate 231. The electrolyte layer 205 made of a glass fiber mat or the like impregnated with an electrolytic solution such as sulfuric acid is disposed between the positive active material layer 203 on the second end plate 231 and the facing negative active material layer 204 of the substrate 211.

The negative-electrode lead layer 202 on the first end plate 221 of the first end frame unit 220 is provided with a negative electrode terminal 207 that is electrically connected with the outside of the first end plate 221. The positive-electrode lead layer 201 on the second end plate 231 of the second end frame unit 230 is provided with a positive electrode terminal 206 that is electrically connected with the outside of the second end plate 231.

That is, the bipolar battery 200 according to the second embodiment includes: the plurality of cell members 250, each including the positive electrode 251 having the positive active material layer 203, the negative electrode 252 having the negative active material layer 204, and the electrolyte layer 205 interposed between the positive electrode 251 and the negative electrode 252, the plurality of cell members 250 being arranged to be stacked at intervals; and the plurality of frame units (the plurality of internal frame units 210, the first end frame unit 220, and the second end frame unit 230) respectively forming the plurality of cells 260 respectively incorporating the plurality of cell members 250.

The cell members 250 adjacent in the stacking direction are electrically connected in series. Therefore, the substrate 211 interposed between the cell members 250 adjacent in the stacking direction includes means of electrically connecting the positive-electrode lead layer 201 and the negative-electrode lead layer 202.

In the bipolar battery 200 according to the second embodiment, each of the plurality of frame units (the plurality of internal frame units 210, the first end frame unit 220, and the second end frame unit 230) is configured by a frame unit made of a light transmissive resin material.

Specifically, the first end frame unit 220 at one end (lower end in FIG. 3) in the stacking direction (vertical direction in FIG. 3) is a frame unit made of a light transmissive resin material, the internal frame unit 210 adjacent to the first end frame unit 220 in the stacking direction is a frame unit made of a light transmissive resin material, the other internal frame unit 210 adjacent to the internal frame unit 210 in the stacking direction is a frame unit made of a light transmissive resin material, and the second end frame unit 230 at the other end (upper end in FIG. 3) in the stacking direction adjacent to the other internal frame unit 210 in the stacking direction is a frame unit made of a light transmissive resin material.

Here, a resin component of the light transmissive resin material serving as a base material is a thermoplastic resin, and the thermoplastic resin that exhibits a transmittance between 50% and 95% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive) is used as the base material.

In addition, a resin component of a light absorbing resin material to be described later serving as a base material is a thermoplastic resin, and contains a light absorbing agent, and the thermoplastic resin serving as the base material contains the light absorbing agent so as to exhibit an absorbance between 5% and 60% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive).

Examples of the thermoplastic resin applicable as the light transmissive resin material and the light absorbing resin material include ABS resin (acrylonitrile butadiene styrene resin), PC (polycarbonate), PS (polystyrene), PMMA (acrylic resin), COP (cyclic polyolefin), PE (polyethylene), PP (polypropylene), PVC (polyvinyl chloride), PBT (polybutylene terephthalate), POM (polyacetal), and PPS (polyphenylene sulfide), and PP and ABS are particularly preferable.

Although the light transmissive resin material and the light absorbing resin material may use different thermoplastic resins as their base materials, it is preferable to use the same thermoplastic resin because there is no difference in melting point and thermal expansion coefficient, and joining reliability is increased.

As the light absorbing agent, for example, conventionally known dyes, pigments, and the like can be used, and examples thereof include a cyanine compound, a phthalocyanine compound, a dithiol metal complex, a naphthoquinone compound, a diimmonium compound, an azo compound, a naphthalocyanine compound, a nickel dithiolene complex, a squarylium dye, a quinone-based compound, quinacridone, dioxane, benzimidazolone, carbon black, titanium oxide, a ferrite compound such as nickel-iron ferrite, manganese-zinc ferrite, nickel-zinc ferrite, or copper-zinc ferrite, nickel, iron particles, gold particles, and copper particles. One of these components can be used singly, or two or more of them can be used in combination.

In particular, in a case where light (laser beam) in a visible light region (approximately between 380 nm and 780 nm inclusive) is used, for example, a phthalocyanine compound, quinacridone, dioxane, benzimidazolone, titanium oxide, gold particles, copper particles, or the like is preferably applied as the light absorbing agent. In a case where light (laser beam) in a near-infrared region (approximately between 780 nm and 2000 nm inclusive) is used, for example, a phthalocyanine compound, nickel, iron particles, manganese-zinc ferrite, nickel-zinc ferrite, copper-zinc ferrite, titanium oxide, or the like is preferably applied as the light absorbing agent.

As the light absorbing agent, any shape such as a spherical form, a powdery form, or a granular form can be used as well as a particulate form. An average particle size of the light absorbing agent is preferably within a range of approximately 0.01 to 2 um. For measurement of the average particle size, for example, a primary particle size of the light absorbing agent in an observation sample may be measured at a predetermined magnification (for example, 100,000 times) using a transmission electron microscope, and an average value thereof may be used. In a case where the shape of the light absorbing agent is not spherical, a major axis and a minor axis may be measured, and a value calculated by (the sum of the major axis and the minor axis)/2 may be used as the average particle size.

In the bipolar battery 200 according to the second embodiment, the two frame units 220 and 210, 210 and 210, and 210 and 230 made of the light transmissive resin material adjacent in the stacking direction (vertical direction in FIG. 3) of the cell members 250 are melted and solidified at welded portions 240, 240, and 240 via joining members 241 (see FIG. 4) made of the light absorbing resin material, to be welded and joined together. As illustrated in FIG. 4, the joining members 241 made of the light absorbing resin material have a sheet shape.

Specifically, in order from one side to the other side in the stacking direction (from the lower side to the upper side in FIG. 3), the joining surface 222a provided on the rim 122 of the first end frame unit (frame unit made of the light transmissive resin material) 220 and the joining surface 212a provided on the first rim 212 of the internal frame unit (frame unit made of the light transmissive resin material) 210 adjacent in the stacking direction are joined at the welded portion 240. The welded portion 240 is formed over an entire periphery of the rim 222 and the first rim 212.

In addition, the joining surface 213a provided on the second rim 213 of the internal frame unit (frame unit made of the light transmissive resin material) 210 and the joining surface 212a provided on the first rim 212 of the other internal frame unit (frame unit made of the light transmissive resin material) 210 adjacent to the internal frame unit (frame unit made of the light transmissive resin material) 210 in the stacking direction are melted and solidified at the welded portion 240, to be welded and joined together. The welded portion 240 is formed over an entire periphery of the second rim 213 and the first rim 212.

Furthermore, the joining surface 213a provided on the second rim 213 of the other internal frame unit (frame unit made of the light transmissive resin material) 210 and the joining surface 232a provided on the rim 232 of the second end frame unit (frame unit made of the light transmissive resin material) 230 adjacent to the other internal frame unit (frame unit made of the light transmissive resin material) 210 in the stacking direction are melted and solidified at the welded portion 240, to be welded and joined together. The welded portion 240 is formed over an entire periphery of the second rim 213 and the rim 232.

Here, as described above, the two frame units 220 and 210, 210 and 210, and 210 and 230 made of the light transmissive resin material are melted and solidified at the respective welded portions 240 via the joining members 241 (see FIG. 4) made of the light absorbing resin material, to be welded and joined together. The light absorbing resin material is as described above.

When the bipolar battery 200 is manufactured, first, as illustrated in FIGS. 3 and 4, the plurality of frame units (the plurality of internal frame units 210, the first end frame unit 220, and the second end frame unit 230) each configured by the frame unit made of the light transmissive resin material are arranged to be stacked in the stacking direction of the cell members 250 (a frame unit arranging step).

Specifically, the first end frame unit (frame unit made of the light transmissive resin material) 220, the internal frame unit (frame unit made of the light transmissive resin material) 210, the other internal frame unit (frame unit made of the light transmissive resin material) 210, and the second end frame unit (frame unit made of the light transmissive resin material) 230 are arranged in this order from the one side to the other side in the stacking direction (from the lower side to the upper side in FIGS. 1 and 2).

Next, as illustrated in FIG. 4, the joining members 241, 241, and 241 made of the light absorbing resin material are arranged between the two frame units 220 and 210, 210 and 210, and 210 and 230 made of the light transmissive resin material adjacent in the stacking direction of the cell members 250 (a joining member arranging step).

Specifically, the joining member 241 made of the light absorbing resin material is arranged between the joining surface 222a provided on the rim 222 of the first end frame unit (frame unit made of the light transmissive resin material) 220 and the joining surface 212a provided on the first rim 212 of the internal frame unit (frame unit made of the light transmissive resin material) 210 adjacent thereto in the stacking direction.

In addition, the joining member 241 made of the light absorbing resin material is arranged between the joining surface 213a provided on the second rim 213 of the internal frame unit (frame unit made of the light transmissive resin material) 210 and the joining surface 212a provided on the first rim 212 of the other internal frame unit (frame unit made of the light transmissive resin material) 210 adjacent thereto in the stacking direction.

Furthermore, the joining member 241 made of the light absorbing resin material is arranged between the joining surface 213a provided on the second rim 213 of the other internal frame unit (frame unit made of the light transmissive resin material) 210 and the joining surface 232a provided on the rim 232 of the second end frame unit (frame unit made of the light transmissive resin material) 230 adjacent thereto in the stacking direction.

The respective joining members 241 made of the light absorbing resin material are formed in a quadrangular frame shape such that the respective welded portions 240 are formed over the entire peripheries of the rim 222, the first rim 212, the second rim 213, the first rim 212, the second rim 213, and the rim 232. A width a2 of each of the joining members 241 made of the light absorbing resin material along the stacking direction is preferably determined as appropriate in consideration of a width W2 of each of the joining surfaces 222a, 212a, 213a, and 232a and a joining strength of each of the welded portions 240. In addition, a thickness t2 of each of the joining members 241 made of the light absorbing resin material in the stacking direction is preferably determined as appropriate in consideration of the joining strength of each of the welded portions 240.

Next, the plurality of welded portions 240 are generated by laser welding, and the two frame units 220 and 210, 210 and 210, and 210 and 230 made of the light transmissive resin material adjacent in the stacking direction of the cell members 250 are joined together. That is, the two frame units 220 and 210, 210 and 210, and 210 and 230 made of the light transmissive resin material adjacent in the stacking direction of the cell members 250 are welded and joined at the welded portions 240 formed by emitting laser beams to pass through one (220, 210, and 210) of the two frame units 220 and 210, 210 and 210, and 210 and 230 made of the light transmissive resin material to the joining members 241, 241, and 241 made of the light absorbing resin material, and by causing the joining members 241, 241, and 241 made of the light absorbing resin material and the two frame units 220 and 210, 210 and 210, and 210 and 230 made of the light transmissive resin material to be melted and solidified (a joining step).

Specifically, as illustrated in FIG. 4, on the one side in the stacking direction, a laser beam C is emitted to pass through the rim 222 of the first end frame unit (frame unit made of the light transmissive resin material) 220 to the joining member 241 made of the light absorbing resin material arranged between the joining surface 212a of the internal frame unit (frame unit made of the light transmissive resin material) 210 and the joining surface 222a of the first end frame unit (frame unit made of the light transmissive resin material) 220. As a result, the joining member 241 made of the light absorbing resin material, the vicinity of the joining surface 222a of the first end frame unit (frame unit made of the light transmissive resin material) 220, and the vicinity of the joining surface 212a of the internal frame unit (frame unit made of the light transmissive resin material) 210 are melted by generated heat, and cooled and solidified to generate the welded portion 240 (see FIG. 3). As a result, the two joining surfaces 222a and 212a of the first end frame unit (frame unit made of the light transmissive resin material) 220 and the internal frame unit 210 adjacent in the stacking direction are joined at the welded portion 240.

Note that it is preferable that a region irradiated with the laser beam C along the stacking direction is substantially an entire region of the width a2 of the joining member 241 made of the light absorbing resin material along the stacking direction.

Moreover, the laser beam C preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, as illustrated in FIG. 4, in the middle of the stacking direction, a laser beam D is emitted to pass through the second rim 213 of one of the internal frame units (frame unit made of the light transmissive resin material, the lower internal frame unit in FIGS. 3 and 4) 210 to the joining member 241 made of the light absorbing resin material arranged between the joining surface 213a of the internal frame unit (frame unit made of the light transmissive resin material) 210 and the joining surface 212a of the other of the internal frame units (frame unit made of the light transmissive resin material, the upper internal frame unit in FIGS. 3 and 4) 210. As a result, the joining member 241 made of the light absorbing resin material, the vicinity of the joining surface 213a of the one internal frame unit (frame unit made of the light transmissive resin material) 210, and the vicinity of the joining surface 212a of the other internal frame unit (frame unit made of the light transmissive resin material) 210 are melted by generated heat, and cooled and solidified to generate the welded portion 240 (see FIG. 3). As a result, the two joining surfaces 213a and 212a of the internal frame units (frame units made of the light transmissive resin material) 210 and 210 adjacent in the stacking direction are joined at the welded portion 140.

Note that it is preferable that a region irradiated with the laser beam D along the stacking direction is substantially an entire region of the width a2 of the joining member 241 made of the light absorbing resin material along the stacking direction similarly to the laser beam C.

Moreover, the laser beam D preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

Furthermore, although not illustrated in the drawings, on the other side in the stacking direction, a laser beam is emitted to pass through the second rim 213 of the other internal frame unit (frame unit made of the light transmissive resin material) 210 to the joining member 241 made of the light absorbing resin material arranged between the joining surface 213a of the other internal frame unit (frame unit made of the light transmissive resin material, the upper internal frame unit in FIGS. 3 and 4) 210 and the joining surface 232a of the second end frame unit 230. As a result, the joining member 241 made of the light absorbing resin material, the vicinity of the joining surface 112a of the internal frame unit (frame unit made of the light transmissive resin material) 110, and the vicinity of the joining surface 232a of the second end frame unit (frame unit made of the light transmissive resin material) 230 are melted by generated heat, and cooled and solidified to generate the welded portion 240 (see FIG. 3). As a result, the two joining surfaces 213a and 232a of the internal frame unit (frame unit made of the light transmissive resin material) 210 and the second end frame unit 230 adjacent in the stacking direction are joined at the welded portion 240.

Note that it is also preferable that a region irradiated with the laser beam along the stacking direction is also substantially an entire region of the width a2 of the joining member 241 made of the light absorbing resin material along the stacking direction similarly to the laser beams C and D.

Moreover, the laser beam also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

The bipolar battery 200 is completely manufactured by injecting the electrolytic solution of the electrolyte layer 205 into the cell 260 through an injection port (not illustrated) after the joining step of the frame units 210, 220, and 230.

As described above, with the bipolar battery 200 according to the second embodiment, each of the plurality of frame units (the plurality of internal frame units 210, the first end frame unit 220, and the second end frame unit 230) is configured by the frame unit made of the light transmissive resin material.

The two frame units 220 and 210, 210 and 210, and 210 and 230 made of the light transmissive resin material adjacent in the stacking direction of the cell members 250 are melted and solidified at the welded portions 240, 240, and 240 via the joining members 241 (see FIG. 4) made of the light absorbing resin material, to be welded and joined together.

As a result, the two frame units 220 and 210, 210 and 210, and 210 and 230 made of the light transmissive resin material adjacent in the stacking direction of the cell members 250 are joined at the welded portions 240, 240, and 240 via the joining members 241 (see FIG. 4) made of the light absorbing resin material, so that the two frame units 220 and 210, 210 and 210, and 210 and 230 made of the light transmissive resin material are sealed to eliminate a gap, and it is possible to reliably prevent electrolytic solution leakage out of the cells 260 by means of a simple seal structure.

In addition, the welded portions 240, 240, and 240 at which the two frame units 220 and 210, 210 and 210, and 210 and 230 made of the light transmissive resin material are melted and solidified via the joining members 241 made of the light absorbing resin material to be welded and joined together have higher airtightness than a joining method using an adhesive. Furthermore, when the two frame units 220 and 210, 210 and 210, and 210 and 230 made of the light transmissive resin material are joined together, burrs are less likely to be generated, and a possibility that burrs enter the cells 260 can be reduced.

Since all of the plurality of frame units 210, 220, and 230 are configured by the frame units made of the same light transmissive resin material, there is no difference in thermal expansion coefficient between the frame units, the joining reliability by the welded portions 240, 240, and 240 can be improved, and it is possible to reliably prevent the electrolytic solution leakage out of the cells 260.

In addition, with the bipolar battery 200 according to the second embodiment, the two frame units 220 and 210, 210 and 210, and 210 and 230 made of the light transmissive resin material adjacent in the stacking direction respectively include the joining surfaces 222a and 212a, 213a and 212a, and 213a and 232a extending along the stacking direction, and the joining surfaces 222a and 212a, 213a and 212a, and 213a and 232a of the two frame units 220 and 210, 210 and 210, and 210 and 230 made of the light transmissive resin material adjacent in the stacking direction are joined at the welded portions 240, 240, and 240. As a result, the joining surfaces 222a and 212a, 213a and 212a, and 213a and 232a of the two frame units 220 and 210, 210 and 210, and 210 and 230 made of the light transmissive resin material adjacent in the stacking direction, the joining surfaces 222a and 212a, 213a and 212a, and 213a and 232a extending along the stacking direction, can be joined at the welded portions 240, 240, and 240, and it is possible to reliably prevent the electrolytic solution leakage out of the cells 260 by means of the simple seal structure.

In addition, with the bipolar battery 200 according to the second embodiment, the resin component of the light transmissive resin material serving as the base material is the thermoplastic resin, and the resin component of the light absorbing resin material serving as the base material is the thermoplastic resin and contains the light absorbing agent. As a result, the two frame units 220 and 210, 210 and 210, and 210 and 230 made of the light transmissive resin material adjacent in the stacking direction of the cell members 250, the resin component of the light transmissive resin material serving as the base material being the thermoplastic resin, are welded and joined via the joining members 241 made of the light absorbing resin material, the resin component of the light absorbing resin material serving as the base material being the thermoplastic resin and containing the light absorbing agent. The two frame units 220 and 210, 210 and 210, and 210 and 230 made of the light transmissive resin material adjacent in the stacking direction of the cell members 250 are sealed to eliminate the gap, and it is possible to reliably prevent the electrolytic solution leakage out of the cells 260 by means of the simple seal structure.

In addition, with the bipolar battery 200 according to the second embodiment, the light transmissive resin material uses as the base material the thermoplastic resin exhibiting the transmittance between 50% and 95% inclusive with respect to the light having the wavelength selected from the range between 380 nm and 2000 nm inclusive, and the light absorbing resin material contains the light absorbing agent in the thermoplastic resin as the base material so as to exhibit the absorbance between 5% and 60% inclusive with respect to the light having the wavelength selected from the range between 380 nm and 2000 nm inclusive. As a result, the two frame units 220 and 210, 210 and 210, and 210 and 230 made of the light transmissive resin material using as the base material the thermoplastic resin exhibiting the transmittance between 50% and 95% inclusive with respect to the light having the wavelength selected from the range between 380 nm and 2000 nm inclusive are joined via the joining members 241 made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive. The two frame units 220 and 210, 210 and 210, and 210 and 230 made of the light transmissive resin material adjacent in the stacking direction of the cell members 250 are sealed to eliminate the gap, and it is possible to reliably prevent the electrolytic solution leakage out of the cells 260 by means of the simple seal structure.

In addition, with the bipolar battery 200 according to the second embodiment, the thermoplastic resin contains at least one of the acrylonitrile-butadiene-styrene resin or the polypropylene resin. As a result, the two frame units 220 and 210, 210 and 210, and 210 and 230 made of the light transmissive resin material using as the base material the thermoplastic resin containing at least one of the acrylonitrile-butadiene-styrene resin or the polypropylene resin are joined via the joining members 241 made of the light absorbing resin material containing the light absorbing agent in the thermoplastic resin containing at least one of the acrylonitrile-butadiene-styrene resin or the polypropylene resin. The two frame units 220 and 210, 210 and 210, and 210 and 230 made of the light transmissive resin material adjacent in the stacking direction of the cell members 250 are sealed to eliminate the gap, and it is possible to reliably prevent the electrolytic solution leakage out of the cells 260 by means of the simple seal structure.

In addition, with the bipolar battery 200 according to the second embodiment, the joining members 241 made of the light absorbing resin material have a sheet shape. As a result, the two frame units 220 and 210, 210 and 210, and 210 and 230 made of the light transmissive resin material adjacent in the stacking direction of the cell members 250 are welded and joined via the sheet-shaped joining members 241 made of the light absorbing resin material, and it is possible to reliably prevent the electrolytic solution leakage out of the cells 260 by means of the simple seal structure.

In addition, the method of manufacturing the bipolar battery 200 according to the second embodiment includes the frame unit arranging step of stacking and arranging the plurality of frame units 210, 220, and 230 in the stacking direction of the cell members 250, each of the plurality of frame units 210, 220, and 230 being configured by the frame unit made of the light transmissive resin material. The method also includes the joining member arranging step of arranging the joining members 241, 241, and 241 made of the light absorbing resin material between the two frame units 220 and 210, 210 and 210, and 210 and 230 made of the light transmissive resin material adjacent in the stacking direction of the cell members 250. The method also includes the joining step of welding and joining together at the welded portions 240, 240, and 240 the two frame units 220 and 210, 210 and 210, and 210 and 230 made of the light transmissive resin material adjacent in the stacking direction of the cell members 250, the welded portions 240, 240, and 240 being formed by emitting the laser beams to pass through one (210, 210, and 230) of the two frame units 220 and 210, 210 and 210, and 210 and 230 made of the light transmissive resin material to the joining members 241, 241, and 241 made of the light absorbing resin material, and by causing the joining members 241, 241, and 241 made of the light absorbing resin material and the two frame units 220 and 210, 210 and 110, and 110 and 130 made of the light transmissive resin material to be melted and solidified.

As a result, it is possible to reliably prevent electrolytic solution leakage out of the cells 260 by means of a simple seal method using laser welding and a simple seal structure.

In addition, with the method of manufacturing the bipolar battery according to the second embodiment, in the joining member arranging step, the joining members 241, 241, and 241 made of the light absorbing resin material are arranged between the joining surfaces 222a and 212a, 213a and 212a, and 213a and 232a respectively provided on the two frame units 220 and 210, 210 and 210, and 210 and 230 made of the light transmissive resin material adjacent in the stacking direction, the joining surfaces 222a and 212a, 213a and 212a, and 213a and 232a extending along the stacking direction. In the joining step, the joining surfaces 222a and 212a, 213a and 212a, and 213a and 232a of the two frame units 220 and 210, 210 and 210, and 210 and 230 made of the light transmissive resin material adjacent in the stacking direction are joined at the welded portions 240, 240, and 240.

As a result, the width of each of the joining surfaces 222a and 212a, 213a and 212a, and 213a and 232a extending along the stacking direction can be made larger than the width of the joining surface extending along the direction perpendicular to the stacking direction, so that a creepage distance of the electrolytic solution leakage out of the cells 260 can be made larger than that in a case of using the joining surface extending along the direction perpendicular to the stacking direction, and electrolytic solution sealing performance can be further improved.

In addition, with the method of manufacturing the bipolar battery according to the second embodiment, the joining members 241 made of the light absorbing resin material have a sheet shape. As a result, in the joining member arranging step, the sheet-shaped joining members 241, 241, and 241 made of the light absorbing resin material are arranged between the two frame units 220 and 210, 210 and 210, and 210 and 230 made of the light transmissive resin material adjacent in the stacking direction of the cell members 250, and in the joining step, the two frame units 220 and 210, 210 and 210, and 210 and 230 made of the light transmissive resin material adjacent in the stacking direction of the cell members 150 are welded and joined at the welded portions 240, 240, and 240 formed by emitting the laser beams to pass through one (210, 210, and 230) of the two frame units 220 and 210, 210 and 210, and 210 and 230 made of the light transmissive resin material to the sheet-shaped joining members 241, 241, and 241 made of the light absorbing resin material, and by causing the joining members 241, 241, and 241 made of the light absorbing resin material and the two frame units 220 and 210, 210 and 210, and 210 and 230 made of the light transmissive resin material to be melted and solidified. It is possible to reliably prevent the electrolytic solution leakage out of the cells 260 by means of the simple seal method using laser welding and the simple seal structure.

Although the embodiments of the present invention have been described above, the present invention is not limited thereto, and various modifications and improvements can be made therein.

For example, in the bipolar battery 100 according to the first embodiment, the two internal frame units 110 are provided. However, the number may be one or may be three or more.

In addition, in the bipolar battery 200 according to the second embodiment, the two internal frame units 210 are provided. However, the number may be one or may be three or more.

In addition, the electrical connection means provided in the substrates 111 and 211 in the bipolar storage batteries 100 and 200 according to the first and second embodiments is not limited to a specific method. For example, opposite surfaces of the substrate may be electrically connected by causing the entire substrate to contain conductive particles or conductive fibers. A conductive member that enables electrical connection may also be incorporated in the substrate.

Moreover, in the method of manufacturing the bipolar battery 100 according to the first embodiment, the laser beams are emitted to pass through one (110, 110, and 130) of the two frame units 120 and 110, 110 and 110, and 110 and 130 made of the light transmissive resin material to the joining members 141, 141, and 141 made of the light absorbing resin material. However, light other than the laser beam may be emitted to pass through one (110, 110, and 130) of the two frame units 120 and 110, 110 and 110, and 110 and 130 made of the light transmissive resin material to the joining members 141, 141, and 141 made of the light absorbing resin material. The same applies to the method of manufacturing the bipolar battery 200 according to the second embodiment.

In addition, the bipolar battery 100 according to the first embodiment is the bipolar lead-acid battery in which the positive electrode 151 has the positive-electrode lead layer 101, and the negative electrode 152 has the negative-electrode lead layer 102. However, the bipolar battery may use a metal other than lead for the positive electrode 151 and the negative electrode 152. The same applies to the bipolar battery 200 according to the second embodiment.

### Industrial Applicability

Since the bipolar battery and the method of manufacturing the same according to the present invention can reliably prevent the electrolytic solution leakage out of the cell by means of the simple seal structure, both high energy density and long-term reliability can be achieved, and the bipolar battery and the method of manufacturing the same can be extremely advantageously used in various industries.

### Reference Signs List

100 bipolar battery
101 positive-electrode lead layer
102 negative-electrode lead layer
103 positive active material layer
104 negative active material layer
105 electrolyte layer
106 positive electrode terminal
107 negative electrode terminal
110 internal frame unit (frame unit made of a light transmissive resin material)
111 substrate (bipolar plate)
112 rim
112a joining surface
120 first end frame unit (frame unit made of a light transmissive resin material)
121 first end plate
122 rim
122a joining surface
130 second end frame unit (frame unit made of a light transmissive resin material)
131 second end plate
132 rim
132a joining surface
140 welded portion
141 joining member made of a light absorbing resin material
150 cell member
151 positive electrode
152 negative electrode
160 cell (space incorporating a cell member)
200 bipolar battery
201 positive-electrode lead layer
202 negative-electrode lead layer
203 positive active material layer
204 negative active material layer
205 electrolyte layer
206 positive electrode terminal
207 negative electrode terminal
210 internal frame unit (frame unit made of a light transmissive resin material)
211 substrate (bipolar plate)
212 first rim
212a joining surface
213 second rim
213a joining surface
220 first end frame unit (frame unit made of a light transmissive resin material)
221 first end plate
222 rim
222a joining surface
230 second end frame unit (frame unit made of a light transmissive resin material)
231 second end plate
232 rim
240 welded portion
241 joining member made of a light absorbing resin material
232a joining surface
250 cell member
251 positive electrode
252 negative electrode
260 cell (space incorporating a cell member)

## Claims

1. A bipolar battery comprising: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series, wherein
each of the plurality of frame units is configured by a frame unit made of a light transmissive resin material, and
two of the frame units made of a light transmissive resin material adjacent in the stacking direction of the cell members are welded and joined via a joining member made of a light absorbing resin material.

2. The bipolar battery according to claim 1,
wherein each of the two frame units made of a light transmissive resin material adjacent in the stacking direction includes a joining surface extending along a direction perpendicular to the stacking direction, and the joining surfaces of the two frame units made of a light transmissive resin material adjacent in the stacking direction are welded and joined via the joining member made of a light absorbing resin material.

3. The bipolar battery according to claim 1,
wherein each of the two frame units made of a light transmissive resin material adjacent in the stacking direction includes a joining surface extending along the stacking direction, and the joining surfaces of the two frame units made of a light transmissive resin material adjacent in the stacking direction are joined via the joining member made of a light absorbing resin material.

4. The bipolar battery according to any one of claims 1 to 3, wherein
a resin component of the light transmissive resin material serving as a base material is a thermoplastic resin, and
a resin component of the light absorbing resin material serving as a base material is a thermoplastic resin and contains a light absorbing agent.

5. The bipolar battery according to any one of claims 1 to 3, wherein
the light transmissive resin material uses as a base material a thermoplastic resin exhibiting a transmittance between 50% and 95% inclusive with respect to light having a wavelength selected from a range between 380 nm and 2000 nm inclusive, and
the light absorbing resin material contains a light absorbing agent in a thermoplastic resin as a base material, to exhibit an absorbance between 5% and 60% inclusive with respect to light having a wavelength selected from a range between 380 nm and 2000 nm inclusive.

6. The bipolar battery according to claim 5,
wherein the thermoplastic resin contains at least one of an acrylonitrile-butadiene-styrene resin or a polypropylene resin.

7. The bipolar battery according to any one of claims 1 to 6, wherein the joining member made of a light absorbing resin material has a sheet shape.

8. The bipolar battery according to any one of claims 1 to 7, wherein the bipolar battery is a bipolar lead-acid battery in which the positive electrode has a positive-electrode lead layer and the negative electrode has a negative-electrode lead layer.

9. A method of manufacturing a bipolar battery, the bipolar battery including: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series, the method comprising:
a frame unit arranging step of stacking and arranging the plurality of frame units in the stacking direction of the cell members, each of the plurality of frame units being configured by a frame unit made of a light transmissive resin material;
a joining member arranging step of arranging a joining member made of a light absorbing resin material between two of the frame units made of a light transmissive resin material adjacent in the stacking direction of the cell members; and
a joining step of welding and joining together at a welded portion the two frame units made of a light transmissive resin material adjacent in the stacking direction of the cell members, the welded portion being formed by emitting light to pass through one of the two frame units made of a light transmissive resin material to the sheet made of a light absorbing resin material, and by causing the joining member made of a light absorbing resin material and the two frame units made of a light transmissive resin material to be melted and solidified.

10. The method of manufacturing a bipolar battery according to claim 9, wherein
in the joining member arranging step, the joining member made of a light absorbing resin material is arranged between joining surfaces respectively provided on the two frame units made of a light transmissive resin material adjacent in the stacking direction, the joining surfaces extending along a direction perpendicular to the stacking direction, and
in the joining step, the joining surfaces of the two frame units made of a light transmissive resin material adjacent in the stacking direction are joined at the welded portion.

11. The method of manufacturing a bipolar battery according to claim 9, wherein
in the joining member arranging step, the joining member made of a light absorbing resin material is arranged between joining surfaces respectively provided on the two frame units made of a light transmissive resin material adjacent in the stacking direction, the joining surfaces extending along the stacking direction, and
in the joining step, the joining surfaces of the two frame units made of a light transmissive resin material adjacent in the stacking direction are joined at the welded portion.

12. The method of manufacturing a bipolar battery according to any one of claims 9 to 11, wherein the joining member made of a light absorbing resin material has a sheet shape.
